# EUROPEAN PATENT SPECIFICATION

(11) **EP 3 164 002 B1**
(45) Date of publication and mention of the grant of the patent: **22.04.2020**
(21) Application number: 15724695.0
(22) Date of filing: 28.05.2015
(51) Int. Cl.: A01N 25/04, A01N 25/10, A01N 43/36, A01N 43/653, A01N 47/24, A01N 53/00, A01P 3/00, A01P 7/00, A01P 13/00

(54) **AGROCHEMICAL SUSPOEMULSION COMPRISING POLYMER PARTICLES MADE OF METHYL (METH)ACRYLATE AND C2-C8 ALKYL (METH)ACRYLATE**
AGROCHEMISCHE SUSPOEMULSION MIT POLYMERPARTIKELN AUS METHYL(METH)ACRYLAT UND C2-C8-ALKYL(METH)ACRYLAT
SUSPOEMULSION AGROCHIMIQUE COMPRENANT DES PARTICULES POLYMÈRES CONSTITUÉES DE MÉTHYL(MÉTH)ACRYLATE ET DE (MÉTH)ACRYLATE D'ALKYLE EN C2-C12

(30) Priority: 03.06.2014 US 201462006910 P; 05.08.2014 US 201462033141 P; 08.08.2014 EP 14180353; 12.08.2014 EP 14180602; 12.08.2014 EP 14180592
(43) Date of publication of application: 10.05.2017
(73) Proprietor: BASF SE, 67056 Ludwigshafen am Rhein (DE)
(72) Inventor: AUWETER, Helmut, 67117 Limburgerhof (DE); XU, Wen, Cary, North Carolina 27519 (US); RUMLEY, Megan, Cary, NC 27511 (US); KRAYER, Michael, Charlotte, North Carolina 28226 (US)
(74) Representative: BASF IP Association
(86) International application number: PCT/EP2015/061789
(87) International publication number: WO 2015/185430

(56) References cited:
- CN-A- 1 478 391
- US-A- 6 074 986
- US-A1- 2006 171 979
- US-A1- 2011 166 309
- US-A1- 2011 257 166
- US-A1- 2012 040 827
- US-A1- 2012 128 750
- US-B1- 6 455 471
- US-B2- 6 767 865

## Description

The present invention relates to an aqueous suspoemulsion comprising a first pesticide, which is dissolved in a water-immiscible solvent, a second pesticide, which is suspended in continuous aqueous phase, and a polymer in form of polymer particles, where the polymer comprises methyl (meth)acrylate and C₂-C₈ alkyl (meth)acrylate in polymerized form. Furthermore, the invention relates to a process for the preparation of said suspoemulsion by contacting water, the first pesticide, the second pesticide, the water-immiscible solvent and the polymer particles. Further subject matter are a method of controlling phytopathogenic fungi and/or undesired plant growth and/or undesired insect or mite attack and/or for regulating the growth of plants, wherein the suspoemulsion is allowed to act on the respective pests, their environment or the crop plants to be protected from the respective pest, on the soil and/or on undesired plants and/or on the crop plants and/or on their environment; and seed containing said suspoemulsion. The present invention comprises combinations of preferred features with other preferred features.

Agrochemical suspoemulsions are also known as "SE" type agro formulations.

US 6,455,471 B1 discloses aqueous suspoemulsions comprising two herbicides and an acrylic graft copolymer.
US 2011/257166 A1 discloses aqueous suspoemulsions comprising two fungicides and an acrylic graft copolymer.
US 2006/171979 A1 discloses aqueous suspoemulsions comprising two fungicides and an acrylic graft copolymer.
US 2011/166309 A1 discloses formulations of pesticides wherein a copolymer stabilizes two active ingredients in an aqueous phase in finely distributed form.

Object of the present invention was to further improve agrochemical formulations, for example with regard to their storage stability, their rain fastness, their dilution stability and their biological activity.

The object was achieved by an aqueous suspoemulsion comprising a first pesticide which is dissolved in a water-immiscible solvent, a second pesticide which is suspended in a continuous aqueous phase, and a polymer in form of polymer particles, where the polymer comprises methyl (meth)acrylate and C₂-C₈ alkyl (meth)acrylate in polymerized form.

A **suspoemulsion** (SE) is typically a conventional type of formulation in the field of the agrochemical formulations. In SE formulations of pesticides, the suspoemulsion is pre-formed in the commercial product and is conventionally diluted with a carrier, such as water, when making up the spray mixture.

The suspoemulsion usually comprises a continuous aqueous phase, a dispersed oil phase, and a suspended solid phase. The **oil phase** usually forms droplets within the aqueous phase. The oil phase usually comprises the water-immiscible solvent. The oil phase usually comprises the first pesticide, which is dissolved in the water-immiscible solvent. The **solid phase** usually forms solid particles within the aqueous phase. The solid phase usually comprises the second pesticide, which is suspended in a continuous aqueous phase.

The first pesticide is dissolved in the water-immiscible solvent. Preferably, the first pesticide is present at least in the dispersed oil phase of the suspoemulsion. The second pesticide is suspended in the continuous aqueous phase. Preferably, the second pesticide is present at least in the solid phase of the suspoemulsion.

The suspoemulsion may comprise at least one **further pesticide** in addition to the first and the second pesticide. The further pesticide may be present in the oil phase and/or in the aqueous phase.

The mean **droplet size** of the oil phase droplets is usually in the range of from 0.1 to 20 µm, in particular of from 0.3 to 10 µm and specifically of from 0.5 to 4.0 µm. The mean droplet size can be determined by particle-size measurement by means of laser diffraction, for example using a Malvern Mastersizer 2000.

The second pesticide may be present in the form of crystalline or amorphous particles which are solid at 20°C. The second pesticide usually is present in form of solid particles. The second pesticide has a usually **particle size** distribution with an x50 value of from 0.1 to 10 µm, preferably 0.2 µm to 5 µm and especially preferably 0.5 µm to 2 µm. The particle size distribution can be determined by laser light diffraction of an aqueous suspension comprising the particles. The sample preparation, for example the dilution to the measuring concentration, will, in this measuring method, depend on the fineness and concentration of the active substances in the suspension sample and on the apparatus used (for example Malvern Mastersizer), inter alia. The procedure should be developed for the system in question and is known to a person skilled in the art.

The suspoemulsion is an aqueous suspoemulsion, which means for example that the suspoemulsion comprises water. The suspoemulsion can comprise at least 5% by weight, preferably at least 10% by weight and especially preferably at least 15% by weight of **water** based on the total weight of the suspoemulsion. The suspoemulsion can comprise from 20 to 85% by weight, preferably from 30 to 75% by weight and especially preferably from 35 to 70% by weight of water, based on the total weight of the suspoemulsion.

The suspoemulsion comprises a **water-immiscible solvent.** The water-immiscible solvent may be soluble in water at 20 °C up to 50 g/l, preferably up to 20 g/l, and in particular up to 5 g/l.

Suitable examples for water-immiscible solvents are
- a hydrocarbon solvent such a an aliphatic, cyclic and aromatic hydrocarbons (e. g. toluene, xylene, paraffin, tetrahydronaphthalene, alkylated naphthalenes or their derivatives, mineral oil fractions of medium to high boiling point (such as kerosene, diesel oil, coal tar oils));
- a vegetable oil such as corn oil, rapeseed oil;
- benzyl acetate;
- a fatty acid ester such as C₁-C₁₀-alkylester of a C₁₀-C₂₂-fatty acid; or
- methyl- or ethyl esters of vegetable oils such as rapeseed oil methyl ester or corn oil methyl ester.
Mixtures of aforementioned solvents are also possible. Preferred solvents are aromatic hydrocarbons.

Suitable water-immiscible solvents are **aromatic hydrocarbons.** Aromatic hydrocarbons are compounds which consist of carbon and hydrogen and which comprise aromatic groups. Preferred are aromatic hydrocarbons or their mixtures with an initial boiling point of at least 160°C, preferably at least 180°C. Examples of aromatic hydrocarbons are benzene, toluene, o-, m- or p-xylene, naphthalene, biphenyl, o- or m-terphenyl, aromatic hydrocarbons which are mono- or polysubstituted by C₁-C₂₀-alkyl, such as ethylbenzene, dodecylbenzene, tetradecylbenzene, hexadecylbenzene, methylnaphthalene, diisopropylnaphthalene, hexylnaphthalene or decylnaphthalene. Others which are suitable are aromatic hydrocarbon mixtures with an initial boiling point of at least 160°C. Preferred aromatic hydrocarbons are aromatic hydrocarbon mixtures with an initial boiling point of at least 160°C, preferably at least 180°C. Mixtures of the above aromatic hydrocarbons are also possible.

Usually, the suspoemulsion comprises from 5 to 60% by weight, preferably from 10 to 55% by weight, especially preferably from 20 to 45% by weight of the water-immiscible solvent, in each case based on the total weight of the suspoemulsion.

The suspoemulsion may comprise in addition to the water-immiscible solvent also a **water-soluble solvent.** The water-soluble solvent may be soluble in water at 20 °C more than 50 g/l, preferably more than 100 g/l. Usually, the suspoemulsion comprises less than 10 % by weight, preferably less than 3 % by weight, especially preferably less than 1 % by weight of the water-soluble solvent, in each case based on the total weight of the suspoemulsion. In one form the suspoemulsion is essentially free of a water-soluble solvent.

The term **pesticide** refers to at least one active substance selected from the group of the fungicides, insecticides, nematicides, herbicides, safeners, biopesticides and/or growth regulators. Preferred pesticides are fungicides, insecticides, herbicides and growth regulators. Especially preferred pesticides are insecticides. Mixtures of pesticides of two or more of the abovementioned classes may also be used. The skilled worker is familiar with such pesticides, which can be found, for example, in the Pesticide Manual, 16th Ed. (2013), The British Crop Protection Council, London. Suitable insecticides are insecticides from the class of the carbamates, organophosphates, organochlorine insecticides, phenylpyrazoles, pyrethroids, neonicotinoids, spinosins, avermectins, milbemycins, juvenile hormone analogs, alkyl halides, organotin compounds nereistoxin analogs, benzoylureas, diacylhydrazines, METI acarizides, and insecticides such as chloropicrin, pymetrozin, flonicamid, clofentezin, hexythiazox, etoxazole, diafenthiuron, propargite, tetradifon, chlorofenapyr, DNOC, buprofezine, cyromazine, amitraz, hydramethylnon, acequinocyl, fluacrypyrim, rotenone, or their derivatives. Suitable fungicides are fungicides from the classes of dinitroanilines, allylamines, anilinopyrimidines, antibiotics, aromatic hydrocarbons, benzenesulfonamides, benzimidazoles, benzisothiazoles, benzophenones, benzothiadiazoles, benzotriazines, benzyl carbamates, carbamates, carboxamides, carboxylic acid diamides, chloronitriles cyanoacetamide oximes, cyanoimidazoles, cyclopropanecarboxamides, dicarboximides, dihydrodioxazines, dinitrophenyl crotonates, dithiocarbamates, dithiolanes, ethylphosphonates, ethylaminothiazolecarboxamides, guanidines, hydroxy-(2-amino)pyrimidines, hydroxyanilides, imidazoles, imidazolinones, inorganic substances, isobenzofuranones, methoxyacrylates, methoxycarbamates, morpholines, N-phenylcarbamates, oxazolidinediones, oximinoacetates, oximinoacetamides, peptidylpyrimidine nucleosides, phenylacetamides, phenylamides, phenylpyrroles, phenylureas, phosphonates, phosphorothiolates, phthalamic acids, phthalimides, piperazines, piperidines, propionamides, pyridazinones, pyridines, pyridinylmethylbenzamides, pyrimidinamines, pyrimidines, pyrimidinonehydrazones, pyrroloquinolinones, quinazolinones, quinolines, quinones, sulfamides, sulfamoyltriazoles, thiazolecarboxamides, thiocarbamates, thiophanates, thiophenecarboxamides, toluamides, triphenyltin compounds, triazines, triazoles. Suitable herbicides are herbicides from the classes of the acetamides, amides, aryloxyphenoxypropionates, benzamides, benzofuran, benzoic acids, benzothiadiazinones, bipyridylium, carbamates, chloroacetamides, chlorocarboxylic acids, cyclohexanediones, dinitroanilines, dinitrophenol, diphenyl ether, glycines, imidazolinones, isoxazoles, isoxazolidinones, nitriles, N-phenylphthalimides, oxadiazoles, oxazolidinediones, oxyacetamides, phenoxycarboxylic acids, phenylcarbamates, phenylpyrazoles, phenylpyrazolines, phenylpyridazines, phosphinic acids, phosphoroamidates, phosphorodithioates, phthalamates, pyrazoles, pyridazinones, pyridines, pyridinecarboxylic acids, pyridinecarboxamides, pyrimidinediones, pyrimidinyl(thio)benzoates, quinolinecarboxylic acids, semicarbazones, sulfonylaminocarbonyltriazolinones, sulfonylureas, tetrazolinones, thiadiazoles, thiocarbamates, triazines, triazinones, triazoles, triazolinones, triazolocarboxamides, triazolopyrimidines, triketones, uracils, ureas.

The first pesticide may comprise at least one **water-insoluble** pesticide. The second pesticide may comprise at least one **water-insoluble** pesticide. Water-insoluble pesticides may have solubility in water of up to 10 g/l, preferably up to 1 g/l, and in particular up to 0.5 g/l, at 20 °C.

The first pesticide may be soluble in the water-immiscible solvent (e.g. toluene), e.g. in an amount of at least 5 g/l, preferably at least 20 g/l and in particular at least 40 g/l, at 20 °C.

The first pesticide may be solid or liquid at 20 °C.

The second pesticide may have a melting point of at least 40 °C, preferably at least 50 °C, and in particular at least 70 °C.

Usually, the suspoemulsion comprises from 0.1 to 35% by weight, preferably from 0.5 to 20% by weight, especially preferably from 1 to 10% by weight of the first pesticide, in each case based on the total weight of the suspoemulsion.

Usually, the suspoemulsion comprises from 0.1 to 35% by weight, preferably from 0.5 to 25% by weight, especially preferably from 2 to 15% by weight of the second pesticide, in each case based on the total weight of the suspoemulsion.

Usually, the suspoemulsion comprises from 0.1 to 35% by weight, preferably from 0.5 to 25% by weight, especially preferably from 3 to 15% by weight of the sum of all pesticides (e.g. the sum of the first pesticide, the second pesticide and the further pesticide), in each case based on the total weight of the suspoemulsion.

The polymer particles comprise the **polymer,** where the polymer comprises methyl (meth)acrylate and C₂-C₈ alkyl (meth)acrylate in polymerized form. Preferably, the polymer particles consist of the polymer, where the polymer comprises methyl (meth)acrylate and C₂-C₈ alkyl (meth)acrylate in polymerized form.

The polymer comprises methyl (meth)acrylate (Monomer A) and C₂-C₈ alkyl (meth)acrylate (Monomer B) in polymerized form.

The term **"methyl (meth)acrylate"** relates to methyl methacrylate and/or methyl acrylate. Preferably methyl (meth)acrylate (Monomer A) is methyl methacrylate.

The polymer comprises usually at least 20 wt%, preferably at least 30 wt%, and in particular at least 40 wt% of the methyl (meth)acrylate (e.g. methyl methacrylate), based on the total weight of the monomers. The polymer comprises usually up to 80 wt%, preferably up to 70 wt%, and in particular up to 60 wt% of the methyl (meth)acrylate (e.g. methyl methacrylate), based on the total weight of the monomers.

The term "C₂-C₈ alkyl (meth)acrylate" relates to C₂-C₈ alkyl acrylate and/or C₂-C₈ alkyl methacrylate. Monomer B is C₂-C₈ alkyl (meth)acrylate, preferably C₃-C₆ alkyl (meth)acrylate, and in particular butyl acrylate. In another preferred form Monomer B is C₂-C₈ alkyl acrylate, more preferably C₃-C₆ alkyl acrylate, and in particular butyl acrylate.

The polymer comprises usually at least 20 wt%, preferably at least 30 wt%, and in particular at least 40 wt% of the Monomer B (e.g. butyl acrylate), based on the total weight of the monomers. The polymer comprises usually up to 80 wt%, preferably up to 70 wt%, and in particular up to 60 wt% of the Monomer B (e.g. butyl acrylate), based on the total weight of the monomers.

In one form the polymer comprises methyl methacrylate and C₂-C₈ alkyl (meth)acrylate in polymerized form. In another form the polymer comprises methyl methacrylate and C₃-C₆ alkyl acrylate in polymerized form.

In a preferred form the polymer comprises 30 to 70 wt% methyl methacrylate and 30 to 70 wt% C₂-C₈ alkyl (meth)acrylate in polymerized form.

In another preferred form the polymer comprises 30 to 70 wt% methyl methacrylate and 30 to 70 wt% C₃-C₆ alkyl acrylate in polymerized form.

In more preferred form the polymer comprises 35 to 65 wt% methyl methacrylate and 35 to 65 wt% C₂-C₆ alkyl (meth)acrylate in polymerized form.

In another form the polymer comprises 35 to 65 wt% methyl methacrylate and 35 to 65 wt% butyl acrylate in polymerized form.

The polymer may comprise at least one (e.g. one to five) **further monomer** (Monomer C) in polymerized form in addition to Monomer A and Monomer B.

Suitable further monomers (Monomer C) include, for example, acrylic acid, methacrylic acid, vinyl acetate, styrene, acrylonitrile, and mixtures thereof. Further examples include vinyltoluenes; conjugated dienes (e.g., 1,3-butadiene and isoprene); α,β-monoethylenically unsaturated mono- and dicarboxylic acids or anhydrides thereof (e.g., itaconic acid, crotonic acid, dimethacrylic acid, ethylacrylic acid, allylacetic acid, vinylacetic acid maleic acid, fumaric acid, mesaconic acid, methylenemalonic acid, citraconic acid, maleic anhydride, itaconic anhydride, and methylmalonic anhydride); esters of maleic acid, fumaric acid, or itaconic acid, with C1-C12, C1 -C8, or C1 -C4 alkanols such as dimethyl maleate and n-butyl maleate); acrylamides and alkyl-substituted acrylamides (e.g., (meth)acrylamide, N-tert-butylacrylamide, and N-methyl (meth)acrylamide); diacetone acrylamide; (meth)acrylonitrile; vinyl and vinylidene halides (e.g., vinyl chloride and vinylidene chloride); vinyl esters of C1 -C18 mono- or dicarboxylic acids (e.g., vinyl propionate, vinyl n-butyrate, vinyl laurate and vinyl stearate); C1-C4 hydroxyalkyl esters of C3-C6 mono- or dicarboxylic acids, especially of acrylic acid, methacrylic acid or maleic acid, or their derivatives alkoxylated with from 2 to 50 moles of ethylene oxide, propylene oxide, butylene oxide or mixtures thereof, or esters of these acids with C1 -C18 alcohols alkoxylated with from 2 to 50 mol of ethylene oxide, propylene oxide, butylene oxide or mixtures thereof (e.g., hydroxyethyl (meth)acrylate, hydroxypropyl (meth)acrylate, and methylpolyglycol acrylate); silane monomers; and monomers containing glycidyl groups (e.g., glycidyl methacrylate). As used herein, the term "(meth)acrylate" includes both acrylates and methacrylates.

Other examples of Monomer C that can be used include linear 1-olefins, branched-chain 1-olefins or cyclic olefins (e.g., ethene, propene, butene, isobutene, pentene, cyclopentene, hexene, and cyclohexene); vinyl and allyl alkyl ethers having 1 to 40 carbon atoms in the alkyl radical, wherein the alkyl radical can possibly carry further substituents such as a hydroxyl group, an amino or dialkylamino group, or one or more alkoxylated groups (e.g., methyl vinyl ether, ethyl vinyl ether, propyl vinyl ether, isobutyl vinyl ether, 2-ethylhexyl vinyl ether, vinyl cyclohexyl ether, vinyl 4-hydroxybutyl ether, decyl vinyl ether, dodecyl vinyl ether, octadecyl vinyl ether, 2-(diethylamino)ethyl vinyl ether, 2-(di-n-butylamino)ethyl vinyl ether, methyldiglycol vinyl ether, and the corresponding allyl ethers); sulfo-functional monomers (e.g., allylsulfonic acid, methallylsulfonic acid, styrenesulfonate, allyloxybenzenesulfonic acid, 2-acrylamido-2-methylpropanesulfonic acid, and their corresponding alkali metal or ammonium salts, sulfopropyl acrylate and sulfopropyl methacrylate); vinylphosphonic acid, dimethyl vinylphosphonate, and other phosphorus monomers; alkylaminoalkyl (meth)acrylates or alkylaminoalkyl(meth)acrylamides or quaternization products thereof (e.g., 2-(N,N-dimethylamino)ethyl (meth)acrylate, 3-(N,N-dimethylamino)propyl (meth)acrylate, 2-(N,N,N-trimethylammonium)ethyl (meth)acrylate chloride, 2-dimethylaminoethyl(meth)acrylamide, 3-dimethylaminopropyl(meth)acrylamide, and 3-trimethylammoniumpropyl(meth)acrylamide chloride); allyl esters of C1 -C30 monocarboxylic acids; N-vinyl compounds (e.g., N-vinylformamide, N-vinyl-N-methylformamide, N-vinylpyrrolidone, N-vinylimidazole, 1-vinyl-2-methylimidazole, 1-vinyl-2-methylimidazoline, N-vinylcaprolactam, vinylcarbazole, 2-vinylpyridine, and 4-vinylpyridine).

The Monomer C used may include **cross-linking monomers,** such as divinylbenzene; 1,4-butanediol diacrylate; methacrylic acid anhydride; monomers containing 1,3-diketo groups (e.g., acetoacetoxyethyl(meth)acrylate or diacetonacrylamide); and monomers containing urea groups (e.g., ureidoethyl (meth)acrylate, acrylamidoglycolic acid, and methacrylamidoglycolate methyl ether); and silane crosslinkers (e.g., 3-methacryloxypropyl trimethoxysilane and 3-mercaptopropyl trimethoxysilane). Additional examples of crosslinkers include N-alkylolamides of α,β-monoethylenically unsaturated carboxylic acids having 3 to 10 carbon atoms and esters thereof with alcohols having 1 to 4 carbon atoms (e.g., N-methylolacrylamide and N-methylolmethacrylamide); glyoxal based crosslinkers; monomers containing two vinyl radicals; monomers containing two vinylidene radicals; and monomers containing two alkenyl radicals. Exemplary crosslinking monomers include diesters or triesters of dihydric and trihydric alcohols with α,β-monoethylenically unsaturated monocarboxylic acids (e.g., di(meth)acrylates, tri(meth)acrylates), of which in turn acrylic acid and methacrylic acid can be employed. Examples of such monomers containing two non-conjugated ethylenically unsaturated double bonds are alkylene glycol diacrylates and dimethacrylates, such as ethylene glycol diacrylate, 1,3-butylene glycol diacrylate, 1,4-butylene glycol diacrylate and propylene glycol diacrylate, vinyl methacrylate, vinyl acrylate, allyl methacrylate, allyl acrylate, diallyl maleate, diallyl fumarate and methylenebisacrylamide. The crosslinking monomers when used in the copolymer can be present in an amount of from 0.2% to 5% by weight based on the weight of the total monomer. Usually, the polymer is free of coss-linking monomers.

Preferably, the Monomer C comprises an **acidic monomer,** which may comprise an acidic unit. Preferably, the acidic monomer comprises a carboxylic acid unit, a sulfonic acid unit, and/or salts thereof. In particular, the acidic monomer comprises a carboxylic acid unit and/or salts thereof.

Examples of acidic monomers are acrylic acid, methacrylic acid, vinylsulfonic acid, vinylphosphonic acid, maleic acid, fumaric acid, crotonic acid, itaconic acid, styrenesulfonic acid, vinylsulfonic acid, allylsulfonic acid, methallylsulfonic acid, 2-acrylamido-2-methylpropanesulfonic acid, 2 methacrylamido-2-methylpropanesulfonic acid, 2 acrylamidoethanesulfonic acid, 2-methacrylamidoethanesulfonic acid, 2 acryloxyethane sulfonic acid, 2 methacryloxyethanesulfonic acid, 3-acryloxypropanesulfonic acid, 2-methacryloxypropane sulfonic acid, and/or salts thereof.

If the acidic monomers are present in their salt form, they have a corresponding cation as counterion. Examples of suitable cations are alkali metal cations, such as Na⁺ or K⁺, alkaline earth metal ions, such as Ca²⁺ and Mg²⁺, furthermore ammonium ions, such as NH₄⁺, tetraalkylammonium cations, such as tetramethylammonium, tetraethylammonium and tetrabutylammonium, furthermore protonated primary, secondary and tertiary amines, in particular those carrying 1, 2 or 3 radicals selected from the group consisting of C₁-C₂₀-alkyl groups and hydroxyethyl groups, for example the protonated forms of mono-, di- and tributylamine, propylamine, diisopropylamine, hexylamine, dodecylamine, oleylamine, stearylamine, ethoxylated oleylamine, ethoxylated stearylamine, ethanolamine, diethanolamine, triethanolamine or of N,N-dimethylethanolamine.

Most preferred acidic co-monomer is acrylic acid, methacrylic acid and/or itaconic acid, in particular acrylic acid and/or itaconic acid.

The polymer comprises usually at least 0.05 wt%, preferably at least 0.2 wt%, and in particular at least 0.7 wt% of the acidic monomer (e.g. acrylic acid and/or itaconic acid), based on the total weight of the monomers. The polymer comprises usually up to 10 wt%, preferably up to 5.0 wt%, and in particular up to 2.5 wt% of the acidic monomer (e.g. acrylic acid and/or itaconic acid), based on the total weight of the monomers.

In another preferred form, the Monomer C comprises an **acrylamide.**

The polymer comprises usually at least 0.05 wt%, preferably at least 0.2 wt%, and in particular at least 0.7 wt% of the acrylamide, based on the total weight of the monomers. The polymer comprises usually up to 10 wt%, preferably up to 4.0 wt%, and in particular up to 2.0 wt% of the acrylamide, based on the total weight of the monomers.

In a more preferred form the Monomer C comprises an acidic monomer (e.g. acrylic acid and/or itaconic acid) and acrylamide.

The polymer comprises usually at least 0.05 wt%, preferably at least 0.2 wt%, and in particular at least 0.7 wt% of the acrylamide, based on the total weight of the monomers. The polymer comprises usually up to 10 wt%, preferably up to 4.0 wt%, and in particular up to 2.0 wt% of the acrylamide, based on the total weight of the monomers.

The polymer comprises usually at least 0.1 wt%, preferably at least 0.8 wt%, and in particular at least 2.0 wt% of the Monomer C (e.g. acrylic acid and acrylamide, and optionally itaconic acid), based on the total weight of the monomers. The polymer comprises usually up to 20 wt%, preferably up to 15 wt%, and in particular up to 10 wt% of the Monomer C (e.g. acrylic acid and acrylamide, and optionally itaconic acid), based on the total weight of the monomers.
In one form the polymer comprises methyl methacrylate and C₂-C₈ alkyl (meth)acrylate in polymerized form, and optionally the Monomer C (e.g. where Monomer C comprises an acidic monomer and/or acrylamide). In another form the polymer comprises methyl methacrylate and C₃-C₆ alkyl acrylate in polymerized form, and optionally the Monomer C (e.g. where Monomer C comprises an acidic monomer and/or acrylamide)

In a preferred form the polymer comprises 30 to 70 wt% methyl methacrylate and 30 to 70 wt% C₂-C₈ alkyl (meth)acrylate in polymerized form, and optionally 0.1 to 20 wt% of the Monomer C (e.g. where Monomer C comprises an acidic monomer and/or acrylamide).

In another preferred form the polymer comprises 30 to 70 wt% methyl methacrylate and 30 to 70 wt% C₃-C₆ alkyl acrylate in polymerized form, and optionally 0.8 to 15 wt% of the Monomer C (e.g. where Monomer C comprises an acidic monomer and/or acrylamide).

In more preferred form the polymer comprises 35 to 65 wt% methyl methacrylate and 35 to 65 wt% C₂-C₆ alkyl (meth)acrylate in polymerized form, and optionally 0.8 to 10 wt% of the Monomer C (e.g. where Monomer C comprises acrylic acid and/or acrylamide).

In another form the polymer comprises 35 to 65 wt% methyl methacrylate and 35 to 65 wt% butyl acrylate in polymerized form, and optionally 2.0 to 3.0 wt% of the Monomer C (e.g. where Monomer C comprises acrylic acid and/or acrylamide).

The polymer described herein can be **prepared** by polymerizing the monomers (e.g. Monomer A, B and optionally C) using free-radical emulsion polymerization. The emulsion polymerization temperature is generally from 30 °C to 95 °C or from 75 °C to 90 °C. The polymerization medium can include water alone or a mixture of water and water-miscible liquids, such as methanol. In some embodiments, water is used alone. The emulsion polymerization can be carried out either as a batch, semi-batch, or continuous process. Typically, a semi-batch process is used. In some embodiments, a portion of the monomers can be heated to the polymerization temperature and partially polymerized, and the remainder of the polymerization batch can be subsequently fed to the polymerization zone continuously, in steps or with superposition of a concentration gradient. Alternatively, other heterophase polymerization methods can be used, such as mini-emulsion polymerization. Further examples of polymerization methods include those described, for example, in Antonietti et al, Macromol. Chem. Phys., 204:207-219 (2003*),* which is incorporated herein by reference.

The free-radical emulsion polymerization can be carried out in the presence of a free-radical polymerization **initiator.** The free-radical polymerization initiators that can be used in the process are all those which are capable of initiating a free-radical aqueous emulsion polymerization including alkali metal peroxydisulfates and H₂O₂, or azo-compounds. Combined systems can also be used comprising at least one organic reducing agent and at least one peroxide and/or hydroperoxide, e.g., tert-butyl hydroperoxide and the sodium metal salt of hydroxymethanesulfinic acid or hydrogen peroxide and ascorbic acid. Combined systems can also be used additionally containing a small amount of a metal compound which is soluble in the polymerization medium and whose metallic component can exist in more than one oxidation state, e.g., ascorbic acid/iron(II) sulfate/hydrogen peroxide, where ascorbic acid can be replaced by the sodium metal salt of hydroxymethanesulfinic acid, sodium sulfite, sodium hydrogen sulfite or sodium metal bisulfite and hydrogen peroxide can be replaced by tert-butyl hydroperoxide or alkali metal peroxydisulfates and/or ammonium peroxydisulfates. In the combined systems, the carbohydrate derived compound can also be used as the reducing component. In general, the amount of free-radical initiator systems employed can be from 0.1 to 2%, based on the total amount of the monomers to be polymerized. In some embodiments, the initiators are ammonium and/or alkali metal peroxydisulfates (e.g., sodium persulfate), alone or as a constituent of combined systems. The manner in which the free-radical initiator system is added to the polymerization reactor during the free-radical aqueous emulsion polymerization is not critical. It can either all be introduced into the polymerization reactor at the beginning, or added continuously or stepwise as it is consumed during the free-radical aqueous emulsion polymerization. In detail, this depends in a manner known to an average person skilled in the art both from the chemical nature of the initiator system and on the polymerization temperature. In some embodiments, some is introduced at the beginning and the remainder is added to the polymerization zone as it is consumed. It is also possible to carry out the free-radical aqueous emulsion polymerization under superatmospheric or reduced pressure.

One or more **polymerization surfactants** can be included to improve certain properties of the dispersion, including particle stability. For example, sodium laureth sulfate, sodium hexametaphosphate, tetrasodium pyrophosphate, tetrapotassium pyrophosphate, and alkylbenzene sulfonic acid or sulfonate surfactants could be used. Examples of commercially available surfactants include CALFOAM ES-303 (Pilot Chemical Company; Cincinnati, OH); DOWFAX 2A1, an alkyldiphenyloxide disulfonate surfactant available from Dow Chemical Company (Midland, Ml); and ALCOSPERSE 149, a sodium polyacrylate surfactant available from Akzo Nobel Surface Chemistry (Chicago, IL). In general, the amount of polymerization surfactants employed can be from 0.01 to 5 %, based on the total amount of the monomers to be polymerized.

In addition, in order to adjust the film-forming properties of the polymer, the polymer particles may also comprise what are known as film-forming consolidating agents (**plasticizers**), examples being ethylene glycol, propylene glycol, butylene glycol, hexylene glycol, alkyl ethers and alkyl ether esters of glycols and polyglycols, e.g., diethylene glycol monoethyl ether, diethylene glycol monoethyl ether acetate, diethylene glycol monobutyl ether, hexylene glycol diacetate, propylene glycol monoethyl ether, monophenyl ether, monobutyl ether and monopropyl ether, dipropylene glycol monomethyl ether, and mono-n-butyl ether, tripropylene glycol mono-n-butyl ether, and the acetates of said monoalkyl ethers, such as butoxybutyl acetate, and also alkyl esters of aliphatic mono- and dicarboxylic acids, such as Texanol® from Eastman, or technical-grade mixtures of dibutyl esters of succinic, glutaric and adipic acid. Film-forming auxiliaries are customarily employed in amounts of from 0.1 to 20 percent by weight, based on the polymer. In one form the polymer particles comprise less than 5 wt%, preferably less than 2 wt%, and in particular less than 0.3 wt% of plasticizers. Preferably, the polymer particles are free of plasticizers.

Small amounts (e.g., from 0.01 to 2% by weight based on the total monomer weight) of molecular weight **regulators,** such as a mercaptan, can optionally be used. Such substances are preferably added to the polymerization zone in a mixture with the monomers to be polymerized and are considered part of the total amount of unsaturated monomers used in the copolymer.

The average **molecular weight** of the polymer is usually from 10.000 to 5.000.000 Da, preferably from 100.000 to 1.000.000 Da, and in particular from 300.000 to 800.000 Da.

The polymer has usually a **glass transition temperature** (Tg) between -10 and +70 °C, preferably between 0 and +70 °C, and in particular between +10 and +60 °C. The Tg may be determined by Differential scanning calorimetry DSC.

The polymer has usually a **minimum film forming temperature** (MFFT) between -10 and +70 °C, preferably between 0 and +70 °C, and in particular between +10 and +60 °C. The MMFT may be determined by commercial MMFT instruments.

The polymer particles may be used or prepared in the form of an aqueous dispersion of polymer particles. The solid contents of said dispersion may be from 20 to 80 wt%.

The polymer particles may have a **particle size** of up to 5000 nm, preferably of up to 1000 nm, and in particular of up to 400 nm. The particle size of the polymer particles is often between 1000 and 10 nm, preferably between 300 and 30 nm, and in particular between 200 and 50 nm. The particle size is usually a mean particle size (z-average) of the polymer particles. It may be determined by dynamic light scattering (photon correlation spectroscopy) on a 0.01 percent by weight dispersion in water at 23 degrees C.

The polymer particles are usually essentially free of the pesticides. The term essentially free of pesticide refers to a concentration of less than 5 wt% with regard to the total mass of the polymer particle.

In a preferred embodiment, the polymer particles contain less than 2 wt% and in a particularly preferred embodiment less than 0.1 wt% of the pesticides.

Usually, the suspoemulsion comprises from 0.1 to 20% by weight, preferably from 0.5 to 12 % by weight, especially preferably from 1.5 to 8% by weight of the **polymer particles,** in each case based on the total weight of the suspoemulsion.

In a form the suspoemulsion comprises from 0.1 to 20 by weight of the first pesticide (e.g. solubility in water of up to 10 g/l), from 0.1 to 35 by weight of the second pesticide (e.g. solubility in water of up to 10 g/l), 5 to 60% by weight of the water-immiscible solvent (e.g. aromatic hydrocarbons), 0.1 to 10% by weight of the polymer particles, and optionally 0.1 to 10% by weight of the water-soluble nonionic emulsifier, where the sum of these components is from 25 to 75 wt%, in each case based on the total weight of the suspoemulsion.

In another form the suspoemulsion comprises from 0.5 to 20 by weight of the first pesticide (e.g. solubility in water of up to 5 g/l), from 0.5 to 25 by weight of the second pesticide (e.g. solubility in water of up to 5 g/l), 10 to 55% by weight of the water-immiscible solvent (e.g. aromatic hydrocarbons), 0.2 to 7% by weight of the polymer particles, and optionally 0.2 to 7% by weight of the water-soluble nonionic emulsifier, where the sum of these components is from 30 to 70 wt%, in each case based on the total weight of the suspoemulsion.

In another form the suspoemulsion comprises from 0.1 to 35 by weight of the first pesticide (e.g. solubility in water of up to 1 g/l), from 2 to 15 by weight of the second pesticide (e.g. solubility in water of up to 1 g/l), 20 to 45% by weight of the water-immiscible solvent (e.g. aromatic hydrocarbons), 0.4 to 5% by weight of the polymer particles, and optionally 0.5 to 5% by weight of the water-soluble nonionic emulsifier, where the sum of these components is from 35 to 65 wt%, in each case based on the total weight of the suspoemulsion.

The suspoemulsion may comprise auxiliaries for agrochemical formulations. Examples for suitable **auxiliaries** are solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable **solid carriers** or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharide powders, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable **surfactants** are surface-active compounds, such as anionic, cationic, nonionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable **anionic** surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

The suspoemulsion preferably comprises an anionic surfactant. Preferred anionic surfactants are sulfonates, where sulfonates of condensed naphthalenes are more preferred. The suspoemulsion may comprise from 0.1 to 12 wt%, preferably from 0.5 to 7 wt%, and in particular from 1 to 4 wt% of the anionic surfactant (e.g. the sulfonate).

Suitable **nonionic** surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable **cationic** surfactants are quaternary surfactants, for example quaternary ammonium compounds with one or two hydrophobic groups, or salts of long-chain primary amines. Suitable **amphoteric** surfactants are alkylbetains and imidazolines. Suitable **block polymers** are block polymers of the A-B or A-B-A type comprising blocks of polyethylene oxide and polypropylene oxide, or of the A-B-C type comprising alkanol, polyethylene oxide and polypropylene oxide.

Suitable **adjuvants** are compounds, which have a negligible or even no pesticidal activity themselves, and which improve the biological performance of the compound I on the target. Examples are surfactants, mineral or vegetable oils, and other auxiliaries. Further examples are listed by Knowles, Adjuvants and additives, Agrow Reports DS256, T&F Informa UK, 2006, chapter 5.

Suitable **thickeners** are polysaccharides (e.g. xanthan gum, carboxymethylcellulose), anorganic clays (organically modified or unmodified), polycarboxylates, and silicates.

Suitable **bactericides** are bronopol and isothiazolinone derivatives such as alkylisothiazolinones and benzisothiazolinones.

Suitable **anti-freezing agents** are ethylene glycol, propylene glycol, urea and glycerin.

Suitable **anti-foaming agents** are silicones, long chain alcohols, and salts of fatty acids. Suitable **colorants** (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable **tackifiers or binders** are polyvinylpyrrolidons, polyvinylacetates, polyvinyl alcohols, polyacrylates, biological or synthetic waxes, and cellulose ethers.

The suspoemulsion may be employed for the purposes of **treatment of plant propagation materials,** particularly seeds. The compositions in question give, after two-to-tenfold dilution, active substance concentrations of from 0.01 to 60% by weight, preferably from 0.1 to 40% by weight, in the ready-to-use preparations. Application can be carried out before or during sowing. Methods for applying or treating the suspoemulsion to plant propagation material, especially seeds include dressing, coating, pelleting, dusting, soaking and in-furrow application methods of the propagation material. Preferably, the suspoemulsion is applied on to the plant propagation material by a method such that germination is not induced, e. g. by seed dressing, pelleting, coating and dusting.

When employed in plant protection, the **amounts of active substances applied** are, depending on the kind of effect desired, from 0.001 to 2 kg per ha, preferably from 0.005 to 2 kg per ha, more preferably from 0.05 to 0.9 kg per ha, in particular from 0.1 to 0.75 kg per ha. In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kilogram of plant propagation material (preferably seed) are generally required. When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizer, or micronutrients, and other pesticides (e.g. herbicides, insecticides, fungicides, growth regulators, safeners) may be added to the suspoemulsion as premix or, if appropriate not until immediately prior to use (**tank mix**). These agents can be admixed with the suspoemulsion according to the invention in a weight ratio of 1:100 to 100:1, preferably 1:10 to 10:1.

The **user applies** the suspoemulsion or the tank mix prepared from the suspoemulsion usually from a pre-dosage device, a knapsack sprayer, a spray tank, a spray plane, or an irrigation system. Usually, the suspoemulsion is made up with water, buffer, and/or further auxiliaries to the desired application concentration and the ready-to-use spray liquor or the agrochemical suspoemulsion according to the invention is thus obtained. Usually, 20 to 2000 liters, preferably 50 to 400 liters, of the ready-to-use spray liquor are applied per hectare of agricultural useful area.

The present invention further relates to a method of **preparing the suspoemulsion** by contacting water, the first pesticide, the second pesticide, the water-immiscible solvent and the polymer particles, and optionally the auxiliaries. The contacting may be achieved in a known manner, such as described by Mollet and Grubemann, Formulation technology, Wiley VCH, Weinheim, 2001; or Knowles, New developments in crop protection product formulation, Agrow Reports DS243, T&F Informa, London, 2005. Usually, the contacting is achieved by mixing (eg in a high shear mixer) at ambient temperatures (eg 10 to 40 °C).

The present invention further relates to a **method of controlling** phytopathogenic fungi and/or undesired plant growth and/or undesired insect or mite attack and/or for regulating the growth of plants, wherein the suspoemulsion is allowed to act on the respective pests, their environment or the crop plants to be protected from the respective pest, on the soil and/or on undesired plants and/or on the crop plants and/or on their environment.

Examples of suitable crop plants are cereals, for example wheat, rye, barley, triticale, oats or rice; beet, for example sugar or fodder beet; pome fruit, stone fruit and soft fruit, for example apples, pears, plums, peaches, almonds, cherries, strawberries, raspberries, currants or gooseberries; legumes, for example beans, lentils, peas, lucerne or soybeans; oil crops, for example oilseed rape, mustard, olives, sunflowers, coconut, cacao, castor beans, oil palm, peanuts or soybeans; cucurbits, for example pumpkins/squash, cucumbers or melons; fiber crops, for example cotton, flax, hemp or jute; citrus fruit, for example oranges, lemons, grapefruit or tangerines; vegetable plants, for example spinach, lettuce, asparagus, cabbages, carrots, onions, tomatoes, potatoes, pumpkin/squash or capsicums; plants of the laurel family, for example avocados, cinnamon or camphor; energy crops and industrial feedstock crops, for example maize, soybeans, wheat, oilseed rape, sugar cane or oil palm; maize; tobacco; nuts; coffee; tea; bananas; wine (dessert grapes and grapes for vinification); hops; grass, for example turf; sweetleaf (Stevia rebaudania); rubber plants and forest plants, for example flowers, shrubs, deciduous trees and coniferous trees, and propagation material, for example seeds, and harvested produce of these plants.

The term crop plants also includes those plants which have been modified by breeding, mutagenesis or recombinant methods, including the biotechnological agricultural products which are on the market or in the process of being developed. Genetically modified plants are plants whose genetic material has been modified in a manner which does not occur under natural conditions by hybridizing, mutations or natural recombination (i.e. recombination of the genetic material). Here, one or more genes will, as a rule, be integrated into the genetic material of the plant in order to improve the plant's properties. Such recombinant modifications also comprise posttranslational modifications of proteins, oligo- or polypeptides, for example by means of glycosylation or binding polymers such as, for example, prenylated, acetylated or farnesylated residues or PEG residues.

The present invention further relates to seed containing the suspoemulsion.

The **advantages** of the suspoemulsion according to the invention are high storage stability, even at varying or low temperatures. In particular, no phase separation or agglomeration is observed during storage. The droplet size in the suspoemulsion is small and/or stable. Moreover, the suspoemulsion according to the invention permits, if required, the addition of large amounts of fat-soluble or water-soluble adjuvants in the oil phase or the aqueous phase. The good storage stability is retained even when such substances are added. Another advantage is the high rainfastness of the suspoemulsion on the crops; a reduced toxicity (e.g. eye toxicity); a reduced amount of surfactants; a reduced spray drift, e.g. for ground or aerial spray application.

The examples which follow illustrate the invention without imposing any limitation.

### Examples

| | |
|---|---|
| Polymer Particles A: | Aqueous suspension of polymer particles comprising on about 49 wt% methyl methacrylate, about 48 wt% butyl acrylate, 1.1 wt% acrylic acid, and 1.75 wt% acrylamide; solid content about 50 wt%; average particle size about 100 nm; Tg about 22 °C. |
| Hydrocarbon A: | Aromatic hydrocarbon solvent, initial boiling point about 230 °C, aromatic content at least 99 vol%, flash point 100-110 °C. |
| Antifoamer: | Silicon defoamer. |
| Auxiliary A: | Oleyl alcohol, ethoxylated with 3 units of ehtylene oxide, HLB 6-7, water-insoluble. |
| Emulsifier A : | Castor oil, ethoxylated with 50-60 units of ethylene oxide, HLB 14-15, melting point 30-35 °C, soluble in cold water. |
| Wetting Agent: | Sodium salt of naphthalene sulfonate condensate, water-soluble powder, wetting power (Draves, 25 °C, 0.1%) >5 min. |
| Auxiliary B: | Ethylene oxide / propylene oxide / ethylene oxide triblock polymer (about 50 wt% EO), HLB 17-18, water-soluble (>10% at 25 °C), molecular weight about 6000-7000 Da. |
| Biocide: | Aqueous mix of 2-methyl-4-isothiazolin-3-one and 1,2-benzisothiazolin -3-one. |

### Example 1 - Preparation

A Pyraclostrobin and Metconazole suspoemulsion A with a composition according to Table 1 was prepared.

**Table 1**

| Component | Concentration [wt%] |
|---|---|
| Pyraclostrobin | 5 |
| Metconazole | 5 |
| Emulsifier A | 2.1 |
| Auxiliary A | 0.5 |
| Hydrocarbon A | 30 |
| Wetting Agent | 0.2 |
| Propylene glycol | 6.3 |
| Biocide | 0.4 |
| Antifoamer | 0.2 |
| Polymer Particles | 7.3 |
| Auxiliary B | 0.1 |
| Xanthan gum | 0.2 |
| Water | To 100% |

The pesticidal suspoemulsion was produced by the following procedure:
I. Preparation of the oil-in-water emulsion
   a) Pyraclostrobin and the Auxiliary A were added to the Hydrocarbon A and stirred until they were dissolved (oil phase).
   b) The Polymer Particles, the Emulsifier A, propylene glycol, the Biocide and the Antifoamer were mixed with water to obtain uniformity (aqueous phase).
   c) The oil phase was poured into the aqueous phase under agitation.
   d) Homogenization was achieved my mixing with 2 minutes at 7000 rpm with a Silverson high shear mixer.
   e) Droplet size was assessed and shearing continued until the oil droplet size reached a value below 3 µm.
II. Preparation of the suspension
   f) Metconazole, the Wetting Agent, the Stabilizer and the Defoamer were added to water under agitation.
   g) The above mixture was then wet milled using a bead mill to particle size around 2 µm.
III. Preparation of the final suspoemulsion
   h) Thickener and the above suspension were added to the above emulsion and mixed until uniformity was obtained.

### Example 2 - Stability

The storage stability of the suspoemulsion of Example 1 was tested with a sample at 40 °C for two weeks, with another sample in a daily cycling temperature from -10 °C to +10 °C for two weeks, with another sample at 21 °C for two weeks and yet with another sample at -10 °C for two weeks.

The emulsion stability was determined by visual observation of the samples. No noticeable phase separation occurred for suspoemulsion A.

The oil droplet size was measured before and after storage by a Malvern® Mastersizer 2000. No droplet size increase was observed for suspoemulsion A.

### Example 3 - Preparation

An Alpha-Cypermethrin and Chlorfenapyr suspoemulsion B with a composition according to Table 2 was prepared by the procedure described in Example 1.

**Table 2**

| Component | Concentration [wt%] |
|---|---|
| Alpha-Cypermethrin | 4.0 |
| Chlorfenapyr | 8.0 |
| Emulsifier A | 2.1 |
| Auxiliary A | 0.5 |
| Hydrocarbon A | 30 |
| Wetting Agent | 0.4 |
| Propylene glycol | 6.3 |
| Biocide | 0.4 |
| Antifoamer | 0.2 |
| Polymer Particles | 7.3 |
| Auxiliary B | 0.2 |
| Xanthan gum | 0.2 |
| Water | To 100% |

### Example 4 - Stability

The storage stability of the suspoemulsion of Example 3 was tested with a sample at 54 °C for two weeks, with another sample in a daily cycling temperature from -10 °C to +10 °C for two weeks, with another sample at 21 °C for two weeks and yet with another sample at -10 °C for two weeks.

The emulsion stability was determined by visual observation of the samples. No noticeable phase separation occurred for suspoemulsion B.

The oil droplet size was measured before / after storage by a Malvern® Mastersizer 2000. No droplet size increase was observed for suspoemulsion B.

## Claims

1. An aqueous suspoemulsion comprising a first pesticide which is dissolved in a water-immiscible solvent, a second pesticide in form of pesticide particles and a polymer in form of polymer particles, where the polymer comprises methyl (meth)acrylate and C₂-C₈ alkyl (meth)acrylate in polymerized form.

2. The suspoemulsion according to claim 1, where the polymer comprises at least 30 wt% methyl (meth)acrylate, based on the total weight of the monomers.

3. The suspoemulsion according to claim 1 or 2, where the polymer comprises at least 30 wt% of the C₂-C₈ alkyl (meth)acrylate.

4. The suspoemulsion according to claims 1 to 3, where the polymer comprises at least one further monomer in polymerized form, which is present in an amount of up to 15 wt%.

5. The suspoemulsion according to claim 4, where the further monomer comprises an acidic monomer.

6. The suspoemulsion according to claims 1 to 5, where the polymer has a glass transition temperature between 0 °C to 70 °C.

7. The suspoemulsion according to claims 1 to 6, where the particle size of the polymer particles is up to 1000 nm.

8. The suspoemulsion according to claims 1 to 7, where the suspoemulsion comprises from 0.1 to 20 wt% of the polymer particles.

9. The suspoemulsion according to claims 1 to 8, where the suspoemulsion comprises from 10 to 55 wt% of a water-immiscible solvent.

10. The suspoemulsion according to claims 1 to 9, where the polymer further comprises an acidic monomer and acrylamide in polymerized form.

11. The suspoemulsion according to claims 1 to 10, where the water-immiscible solvent is an aromatic hydrocarbon.

12. The suspoemulsion according to claims 1 to 11, where the polymer particle comprise less than 2 wt% of the pesticides with regard to their total mass.

13. The suspoemulsion according to claims 1 to 12, which comprises a continuous aqueous phase, a dispersed oil phase, and a suspended solid phase.

14. A method of preparing the suspoemulsion according to any of claims 1 to 13, by contacting water, the first pesticide, the second pesticide, the water-immiscible solvent and the polymer particles.

15. A method of controlling phytopathogenic fungi and/or undesired plant growth and/or undesired insect or mite attack and/or for regulating the growth of plants, wherein the suspoemulsion as defined in any of claims 1 to 13 is allowed to act on the respective pests, their environment or the crop plants to be protected from the respective pest, on the soil and/or on undesired plants and/or on the crop plants and/or on their environment.

16. Seed comprising the suspoemulsion as defined in any of claims 1 to 13.

## Patentansprüche

1. Wässrige Suspoemulsion, umfassend ein erstes Pestizid, das in einem nicht mit Wasser mischbaren Lösungsmittel gelöst ist, ein zweites Pestizid in Form von Pestizidpartikeln und ein Polymer in Form von Polymerpartikeln, wobei das Polymer (Meth)acrylsäuremethylester und (Meth)acrylsäure-C₂-C₈-alkylester in polymerisierter Form umfasst.

2. Suspoemulsion nach Anspruch 1, wobei das Polymer mindestens 30 Gew.-% (Meth)acrylsäuremethylester, bezogen auf das Gesamtgewicht der Monomere, umfasst.

3. Suspoemulsion nach Anspruch 1 oder 2, wobei das Polymer mindestens 30 Gew.-% (Meth)acrylsäure-C₂-C₈-alkylester umfasst.

4. Suspoemulsion nach den Ansprüchen 1 bis 3, wobei das Polymer mindestens ein weiteres Monomer in polymerisierter Form umfasst, das in einer Menge von bis zu 15 Gew.-% vorliegt.

5. Suspoemulsion nach Anspruch 4, wobei das weitere Monomer ein saures Monomer umfasst.

6. Suspoemulsion nach den Ansprüchen 1 bis 5, wobei das Polymer eine Glasübergangstemperatur zwischen 0°C und 70°C aufweist.

7. Suspoemulsion nach den Ansprüchen 1 bis 6, wobei die Teilchengröße der Polymerpartikel bis zu 1000 nm beträgt.

8. Suspoemulsion nach den Ansprüchen 1 bis 7, wobei die Suspoemulsion 0,1 bis 20 Gew.-% an Polymerpartikeln umfasst.

9. Suspoemulsion nach den Ansprüchen 1 bis 8, wobei die Suspoemulsion 10 bis 55 Gew.-% eines nicht mit Wasser mischbaren Lösungsmittels umfasst.

10. Suspoemulsion nach den Ansprüchen 1 bis 9, wobei das Polymer weiterhin ein saures Monomer und Acrylamid in polymerisierter Form umfasst.

11. Suspoemulsion nach den Ansprüchen 1 bis 10, wobei es sich bei dem nicht mit Wasser mischbaren Lösungsmittel um einen aromatischen Kohlenwasserstoff handelt.

12. Suspoemulsion nach den Ansprüchen 1 bis 11, wobei die Polymerpartikel weniger als 2 Gew.-% an Pestiziden, bezogen auf ihre Gesamtmasse, umfassen.

13. Suspoemulsion nach den Ansprüchen 1 bis 12, welche eine kontinuierliche wässrige Phase, eine dispergierte Ölphase und eine suspendierte feste Phase umfasst.

14. Verfahren zur Herstellung der Suspoemulsion nach einem der Ansprüche 1 bis 13 durch Inkontaktbringen von Wasser, dem ersten Pestizid, dem zweiten Pestizid, dem nicht mit Wasser mischbaren Lösungsmittel und den Polymerpartikeln.

15. Verfahren zur Bekämpfung phytopathogener Pilze und/oder unerwünschten Pflanzenwuchses und/oder unerwünschten Insekten- oder Milbenbefalls und/oder zum Regulieren des Wachstums von Pflanzen, bei dem man die wie in einem der Ansprüche 1 bis 13 definierte Suspoemulsion auf die jeweiligen Schädlinge, ihre Umgebung oder die vor dem jeweiligen Schädling zu schützenden Kulturpflanzen, auf den Erdboden und/oder auf unerwünschte Pflanzen und/oder auf die Kulturpflanzen und/oder auf ihre Umgebung einwirken lässt.

16. Saatgut, umfassend die wie in einem der Ansprüche 1 bis 13 definierte Suspoemulsion.

## Revendications

1. Suspo-émulsion aqueuse, comprenant un premier pesticide qui est solubilisé dans un solvant non miscible avec l'eau, un deuxième pesticide sous la forme de particules de pesticide et un polymère sous la forme de particules de polymère, où le polymère comprend du (méth)acrylate de méthyle et un (méth)acrylate de C₂-C₈-alkyle sous forme polymérisée.

2. Suspo-émulsion selon la revendication 1, dans laquelle le polymère comprend au moins 30% en poids de (méth)acrylate de méthyle, sur la base du poids total des monomères.

3. Suspo-émulsion selon la revendication 1 ou 2, dans laquelle le polymère comprend au moins 30% en poids de (méth)acrylate de C₂-C₈-alkyle.

4. Suspo-émulsion selon les revendications 1 à 3, dans laquelle le polymère comprend au moins un monomère supplémentaire sous forme polymérisée, qui est présent selon une quantité allant jusqu'à 15% en poids.

5. Suspo-émulsion selon la revendication 4, dans laquelle le monomère supplémentaire comprend un monomère acide.

6. Suspo-émulsion selon les revendications 1 à 5, dans laquelle le polymère possède une température de transition vitreuse allant de 0°C à 70°C.

7. Suspo-émulsion selon les revendications 1 à 6, dans laquelle la taille de particule des particules de polymère va jusqu'à 1000 nm.

8. Suspo-émulsion selon les revendications 1 à 7, la suspo-émulsion comprenant de 0,1 à 20% en poids des particules de polymère.

9. Suspo-émulsion selon les revendications 1 à 8, la suspo-émulsion comprenant de 10 à 55% en poids d'un solvant non miscible avec l'eau.

10. Suspo-émulsion selon les revendications 1 à 9, dans laquelle le polymère comprend en outre un monomère acide et de l'acrylamide sous forme polymérisée.

11. Suspo-émulsion selon les revendications 1 à 10, dans laquelle le solvant non miscible avec l'eau est un hydrocarbure aromatique.

12. Suspo-émulsion selon les revendications 1 à 11, dans laquelle les particules de polymère comprennent moins de 2% en poids des pesticides, par rapport à leur masse totale.

13. Suspo-émulsion selon les revendications 1 à 12, comprenant une phase aqueuse continue, une phase huileuse dispersée, et une phase solide en suspension.

14. Méthode de préparation de la suspo-émulsion selon l'une quelconque des revendications 1 à 13, par la mise en contact d'eau, du premier pesticide, du deuxième pesticide, du solvant non miscible avec l'eau et des particules de polymère.

15. Méthode de contrôle de champignons phytopathogènes et/ou d'une croissance végétale non désirée et/ou d'une attaque non désirée par des insectes ou des acariens et/ou de régulation de la croissance de plantes, où on laisse agir la suspo-émulsion telle que définie selon l'une quelconque des revendications 1 à 13, sur les nuisibles respectifs, leur environnement ou sur les plantes de culture devant être protégées contre les nuisibles respectifs, sur le sol et/ou sur les plantes non désirées et/ou sur les plantes de culture et/ou sur leur environnement.

16. Semence comprenant la suspo-émulsion telle que définie selon l'une quelconque des revendications 1 à 13.
